# EUROPÄISCHE PATENTSCHRIFT

(11) **EP 4 307 874 B1**
(45) Veröffentlichungstag und Bekanntmachung des Hinweises auf die Patenterteilung: **02.12.2026**
(21) Anmeldenummer: 22710060.9
(22) Anmeldetag: 03.03.2022
(51) Int. Cl.: A01C 7/18

(54) **GRANULATPORTIONIERER FÜR EINE LANDWIRTSCHAFTLICHE AUSBRINGMASCHINE**
GRANULE PORTIONER FOR AN AGRICULTURAL MACHINE
PORTIONNEUR DE GRANULÉS POUR MACHINE AGRICOLE DE DISTRIBUTION

(30) Priorität: 17.03.2021 DE 102021106439
(43) Veröffentlichungstag der Anmeldung: 24.01.2024
(73) Patentinhaber: Amazonen-Werke H. Dreyer SE & Co. KG, 49205 Hasbergen (DE)
(72) Erfinder: HILBERT, Florenz, 48282 Emsdetten (DE); TECKEMEYER, Stephan, 49504 Lotte (DE)
(86) Internationale Anmeldenummer: PCT/EP2022/055355
(87) Internationale Veröffentlichungsnummer: WO 2022/194560

(56) Entgegenhaltungen:
- EP-B1- 3 340 763
- DE-A1- 102019 117 555
- DE-U- 6 914 341

## Beschreibung

Die Erfindung betrifft einen Granulatportionierer für eine landwirtschaftliche Ausbringmaschine nach dem Oberbegriff des Patentanspruchs 1, eine landwirtschaftliche Ausbringmaschine nach dem Oberbegriff des Patentanspruchs 14 und ein Verfahren zum Erzeugen von Granulatportionen nach dem Oberbegriff des Patentanspruchs 15.

Bei einem Granulatportionierer mit einem in einer Portionierkammer angeordneten Portionierrotor, welcher in der Portionierkammer befindliche Granulatkörner zu einer Granulatportion zusammenführt, kann es zu Verklemmungen zwischen dem Portionierrotor und Granulatkörnern kommen. Derartige Verklemmungen können den Portionierbetrieb beeinträchtigen und zu einer Beschädigung des Granulatportionierers führen.

Spaltbereiche zwischen dem Portionierrotor und der Bewandung der Portionierkammer können aufgrund von Fertigungstoleranzen und Verschleiß nicht gänzlich und dauerhaft vermieden werden. Da die Granulatkörner unterschiedliche Größen aufweisen können, kann es bei unterschiedlichen Spaltmaßen zu Verklemmungen zwischen dem Portionierrotor und den Granulatkörnern kommen.

Zur Vermeidung von Verschleißproblemen während der Verwendung eines entsprechenden Granulatportionierers sind die sich auf einer Kreisbahn bewegenden Kontaktkörper des Portionierrotors aus einem formstabilen Material, beispielsweise aus Hartmetall, herzustellen. Elastisch verformbare Kontaktkörper oder Kontaktkörper mit elastisch verformbaren Außenkanten, beispielsweise Kontaktkörper mit Lappen oder Bürsten, sind aus Verschleißgründen ungeeignet.

Entsprechender Stand der Technik ist beispielsweise aus den Druckschriften DE 10 2019 117555 A1, DE 69 14 341 U sowie EP 3 340 763 B1 bekannt.

Die der Erfindung zugrundeliegende Aufgabe besteht somit darin, Verklemmungen zwischen dem Portionierrotor eines Granulatportionierers und Granulatkörnern zu verhindern oder zumindest zu reduzieren.

Die Aufgabe wird gelöst durch einen Granulatportionierer der eingangs genannten Art, wobei der Portionierrotor des erfindungsgemäßen Granulatportionierers einen Ausweichmechanismus aufweist, welcher es dem Kontaktkörper während der Rotationsbewegung des Portionierrotors erlaubt, die Umlaufbahn zur Auflösung und/oder Vermeidung von Verklemmungen zwischen dem Portionierrotor und Granulatkörnern temporär zu verlassen.

Durch den Ausweichmechanismus kann der Kontaktkörper Ausweichbewegungen zur Auslösung und/oder Vermeidung von Verklemmungen zwischen dem Portionierrotor und den Granulatkörnern ausführen. Durch den Ausweichmechanismus können außerdem Fertigungstoleranzen ausgeglichen werden, welche zu unbeabsichtigten Spaltmaßen innerhalb des Granulatportionierers führen. Darüber hinaus kompensiert der Ausweichmechanismus auch Verschleißeffekte, welche zu Maßabweichungen an den Bestandteilen des Granulatportionierers führen. Durch den Ausweichmechanismus wird somit eine verklemmungsbedingte Funktionsbeeinträchtigung und Beschädigung des Granulatportionierers effektiv vermieden.

Die Portionierkammer des Granulatportionierers ist vorzugsweise in einem Gehäuse des Granulatportionierers angeordnet. Der Portionierrotor ist vorzugsweise rotatorisch antreibbar. Hierzu ist der Granulatportionierer vorzugsweise mit einem Rotorantrieb ausgestattet. Der Rotorantrieb kann ein elektrischer, pneumatischer oder hydraulischer Antrieb sein. Die Umlaufbahn, auf welcher sich der Kontaktkörper während der Rotationsbewegung des Portionierrotors bewegt, ist vorzugsweise eine Kreisbahn. Das Granulat, welches mit dem Granulatportionierer portioniert wird, ist vorzugsweise Dünger. Folglich ist der Granulatportionierer vorzugsweise ein Düngerportionierer.

Die Ausweichbewegungen des Kontaktkörpers werden vorzugsweise durch den Kontakt des Kontaktkörpers mit Granulatkörnern verursacht. Verklemmte Granulatkörner blockieren oder beeinträchtigen die Rotationsbewegungen des Portionierrotors, sodass eine Blockadekraft auf den Kontaktkörper ausgeübt wird. Diese von einem Granulatkorn ausgehende Blockadekraft verursacht die Ausweichbewegung des Kontaktkörpers, wodurch der Kontaktkörper ausgelenkt wird.

In einer bevorzugten Ausführungsform des erfindungsgemäßen Granulatportionierers lässt der Ausweichmechanismus eine radiale Ausweichbewegung des Kontaktkörpers zum Verlassen der Umlaufbahn während einer Rotationsbewegung des Portionierrotors zu. Alternativ oder zusätzlich lässt der Ausweichmechanismus eine axiale Ausweichbewegung des Kontaktkörpers zum Verlassen der Umlaufbahn während einer Rotationsbewegung des Portionierrotors zu. Der Ausweichmechanismus kann also auch eine Ausweichbewegung des Kontaktkörpers zulassen, welche eine radiale und eine axiale Komponente umfasst. Der Ausweichmechanismus erlaubt es dem Kontaktkörper während einer Rotationsbewegung des Portionierrotors die Umlaufbahn zur Auflösung und/oder Vermeidung von Verklemmungen zwischen dem Portionierrotor und Granulatkörnern temporär in radialer Richtung und/oder in axialer Richtung zu verlassen. Der Kontaktkörper führt eine Ausweichbewegung in Radialrichtung, insbesondere nach innen bzw. zur Rotationsachse des Portionierrotors hin, aus, wenn sich Granulatkörner in einem Spalt zwischen der die Portionierkammer zumindest abschnittsweise radial begrenzenden, insbesondere zylindrischen oder v-förmigen, Mantelfläche und einer radial-äußeren Kante des Kontaktkörpers befinden. Wenn der Kontaktkörper eine Ausweichbewegung in Radialrichtung nach innen bzw. zur Rotationsachse des Portionierrotors hin ausführt, verringert sich die Radialerstreckung des Portionierrotors und somit auch der Durchmesser. Der Kontaktkörper führt eine Ausweichbewegung in Axialrichtung aus, wenn sich Granulatkörner in einem Spalt zwischen einer die Portionierkammer zumindest abschnittsweise seitlich begrenzenden Seitenwand und einer seitlichen Kante des Kontaktkörpers befinden.

Der erfindungsgemäße Granulatportionierer wird ferner dadurch vorteilhaft weitergebildet, dass der Ausweichmechanismus eine mit dem Kontaktkörper verbundene Radialfederung aufweist, welche die radiale Ausweichbewegung des Kontaktkörpers zum Verlassen der Umlaufbahn während einer Rotationsbewegung des Portionierrotors zulässt. Die Radialfederung ist zwischen der Rotorbefestigung am Rotorantrieb und dem Kontaktkörper positioniert. Die Radialfederung hält den Kontaktkörper beweglich ausweichbar entgegen einer Rückstellkraft in einer Referenzposition, in welcher sich der Kontaktkörper auf der Umlaufbahn befindet. Der Ausweichmechanismus kann einen Anschlag aufweisen, welcher die durch die Radialfederung verursachte Rückstellbewegung des Kontaktkörpers und/oder Verschiebungen aufgrund auf den Kontaktkörper wirkender Fliehkräfte begrenzt. Der Anschlag sorgt dafür, dass der Kontaktkörper nach einer Ausweichbewegung auf die Umlaufbahn zurückbewegt wird und dort ausweichbar nach innen, und vorzugsweise nicht nach außen, gehalten wird.

Es ist darüber hinaus ein erfindungsgemäßer Granulatportionierer vorteilhaft, bei welchem der Portionierrotor zumindest einen Portionierflügel umfasst, wobei der Portionierflügel zwei relativ zueinander bewegliche Kontaktkörper aufweist, wobei der Ausweichmechanismus axiale Ausweichbewegungen der zwei Kontaktkörper zulässt, durch welche die zwei Kontaktkörper, vorzugsweise unabhängig voneinander, deren Umlaufbahn während einer Rotationsbewegung des Portionierrotors temporär verlassen können. Die zwei Kontaktkörper können sich in Axialrichtung abschnittsweise überlappen. Durch eine Ausweichbewegung eines Kontaktkörpers in Axialrichtung kann temporär eine Verringerung der Gesamtbreite des Kontaktflächenverbundes herbeigeführt werden, wodurch es zur Spaltbildung oder Spaltverbreitung kommt. Eine seitliche Außenkante eines ersten Kontaktkörpers läuft vorzugsweise entlang einer ersten Seitenwand der Portionierkammer. Eine seitliche Außenkante eines zweiten Kontaktkörpers läuft vorzugsweise entlang einer zweiten Seitenwand der Portionierkammer. Durch die Zweiteilung wird eine Wandkollision beim Ausführen einer Ausweichbewegung eines Kontaktkörpers vermieden da der jeweilige Kontaktkörper in Drehrichtung vor oder hinter den entsprechend anderen Kontaktkörper verschwenkend ausweichen kann.

In einer anderen Ausführungsform des erfindungsgemäßen Granulatportionierers weist der Kontaktkörper einseitig oder beidseitig elastisch verformbare oder federnd bewegliche Seitenwangen auf, welche ein Fortsetzen einer axialen Ausweichbewegung des Kontaktkörpers in Richtung einer Seitenwand der Portionierkammer auch nach In-Kontakt-Kommen einer Seitenwange mit einer Seitenwand ermöglichen. Der Kontaktkörper kann beispielsweise eine Schaufelform aufweisen. Die Seitenwangen des Kontaktkörpers können abgekantet und/oder aus einem elastischen Material, zum Beispiel Federstahl, ausgebildet sein, sodass die abgekanteten Seitenwangen federnd nach innen gedrückt werden können. Zum Schutz gegen Verschleiß können auf das elastische Material Hartmetallplättchen oder andere verschleißmindernde Körper aufgelötet werden. Die Seitenwangen des Kontaktkörpers können drehbar gelagert sein und mit einer Wangenfederung gegen einen Anschlag gezogen sein. Vorzugsweise verhindert ein Anschlag entgegen der Drehrichtung des Portionierrotors, dass sich die Breite der Schaufel durch die von dem Granulat auf die Schaufel ausgeübte Kraft vergrößert. Vorzugsweise umfasst die Schaufelform keine Rückwand.

Es ist ferner ein erfindungsgemäßer Granulatportionierer vorteilhaft, bei welchem die Portionierkammer in der Umgebung der Umlaufbahn von einer zumindest teilweise umlaufenden Mantelfläche zumindest abschnittsweise radial und/oder axial begrenzt wird. Der Portionierrotor ist vorzugsweise derart in der Portionierkammer angeordnet, dass sich zwischen der radial-äußeren Kante des Kontaktkörpers und einem die Portionierkammer zumindest abschnittsweise radial begrenzenden Teilbereich der Mantelfläche ein Radialspalt bei der Rotationsbewegung des Rotors ergibt. Alternativ oder zusätzlich ist der Portionierrotor derart in der Portionierkammer angeordnet, dass sich zwischen den axial-äußeren Kanten des Kontaktkörpers und die Portionierkammer zumindest abschnittsweise axial begrenzenden Teilbereichen der Mantelfläche Axialspalten bei der Rotationsbewegung des Rotors ergeben. Der Portionierrotor kann ferner derart in der Portionierkammer angeordnet sein, dass sich die Spaltbreite des Radialspalts und/oder der Axialspalten bei einer Ausweichbewegung des Kontaktkörpers verändert. Die Mantelfläche und/oder der Kontaktkörper können jeweils einen trapezförmigen, V-förmigen oder W-förmigen Querschnitt aufweisen. Die äußeren Kanten des Kontaktkörpers und die Mantelfläche verlaufen vorzugsweise parallel zueinander.

In einer weiteren bevorzugten Ausführungsform des erfindungsgemäßen Granulatportionierers ist der Portionierrotor derart in der Portionierkammer angeordnet, dass sich die Spaltbreite des Radialspalts bei einer Ausweichbewegung des Kontaktkörpers in Axialrichtung und/oder bei einer Ausweichbewegung des Kontaktkörpers in Radialrichtung verändert. Alternativ oder zusätzlich ist der Portionierrotor derart in der Portionierkammer angeordnet, dass sich die Spaltbreiten der Axialspalten bei einer Ausweichbewegung des Kontaktkörpers in Axialrichtung und/oder bei einer Ausweichbewegung des Kontaktkörpers in Radialrichtung verändern. Eine radiale Ausweichbewegung des Kontaktkörpers kann also zu einer Verbreiterung der Axialspalten führen. Zur radialen Ausweichbewegung kann zusätzlich eine axiale Ausweichbewegung des Kontaktkörpers hinzutreten, welche auf einer Seite des Kontaktkörpers zu einer weiteren Axialspaltverbreiterung führt.

In einer anderen bevorzugten Ausführungsform des erfindungsgemäßen Granulatportionierers ist zumindest eine axial-äußere Kante des Kontaktkörpers nach außen geneigt, sodass sich der Axialspalt zwischen der axial-äußeren Kante des Kontaktkörpers und einem die Portionierkammer zumindest abschnittsweise axial begrenzenden Teilbereich der Mantelfläche bei einer radial nach innen gerichteten Ausweichbewegung des Kontaktkörpers gemeinsam mit dem Radialspalt vergrößert. Die axial-äußere Kante des Kontaktkörpers verläuft also geneigt gegenüber einer Ebene, welche orthogonal auf der Rotationsachse des Portionierrotors steht. Die zumindest eine axial-äußere Kante des Kontaktkörpers fällt also in Radialrichtung nach innen seitlich nach außen hin ab. Vorzugsweise sind die sich auf beiden Seiten befindenden axial-äußeren Kanten des Kontaktkörpers jeweils nach außen geneigt, sodass sich die Axialspalten zwischen den axial-äußeren Kanten des Kontaktkörpers und den die Portionierkammer zumindest abschnittsweise axial begrenzenden Teilbereichen der Mantelfläche bei einer radial nach innen gerichteten Ausweichbewegung des Kontaktkörpers gemeinsam mit dem Radialspalt vergrößern.

Es ist ferner ein erfindungsgemäßer Granulatportionierer vorteilhaft, bei welchem zumindest ein die Portionierkammer zumindest abschnittsweise axial begrenzender Teilbereich der Mantelfläche nach außen geneigt ist, sodass sich der Axialspalt zwischen der axial-äußeren Kante des Kontaktkörpers und dem die Portionierkammer zumindest abschnittsweise axial begrenzenden Teilbereich der Mantelfläche bei einer radial nach innen gerichteten Ausweichbewegung des Kontaktkörpers gemeinsam mit dem Radialspalt vergrößert. Der die Portionierkammer zumindest abschnittsweise axial begrenzende Teilbereich der Mantelfläche ist also gegenüber einer Ebene geneigt, welche orthogonal auf der Rotationsachse des Portionierrotors steht. Der die Portionierkammer zumindest abschnittsweise begrenzende Teilbereich der Mantelfläche fällt also in Radialrichtung nach innen seitlich nach außen hin ab. Vorzugsweise sind die die Portionierkammer zumindest abschnittsweise zu beiden Seiten hin axial begrenzenden Teilbereiche der Mantelfläche jeweils nach außen geneigt, sodass sich die Axialspalten zwischen den axial-äußeren Kanten des Kontaktkörpers und den die Portionierkammer zumindest abschnittsweise axial begrenzenden Teilbereichen der Mantelfläche bei einer radial nach innen gerichteten Ausweichbewegung des Kontaktkörpers gemeinsam mit dem Radialspalt vergrößern.

In einer weiteren bevorzugten Ausführungsform des erfindungsgemäßen Granulatportionierers ist der Kontaktkörper über ein Verbindungsglied eines Portionierflügels mit einer Nabe des Portionierrotors verbunden. Das Verbindungsglied kann Teil der Radialfederung sein oder die Radialfederung selbst ausbilden. Das Verbindungsglied weist vorzugsweise eine geringere Breite, also eine geringere Erstreckung in Axialrichtung, als der Kontaktkörper auf. Die Breite des Verbindungsglieds beträgt vorzugsweise maximal die Hälfte der Breite des Kontaktkörpers. Das Verbindungsglied ist also schmaler als der Kontaktkörper, sodass das Verbindungsglied während der Rotationsbewegung auf eine geringere Anzahl an Granulatkörnern trifft. Auf diese Weise wird die Entstehung von Kornquerschlägern in Umfangsrichtung verhindert oder zumindest erheblich reduziert.

Der erfindungsgemäße Granulatportionierer wird ferner dadurch vorteilhaft weitergebildet, dass die Portionierkammer eine Einlassöffnung aufweist, über welche Granulat in die Portionierkammer eintreten kann, wobei die Einlassöffnung in einer die Portionierkammer auf einer Einlassseite seitlich begrenzenden Seitenwand der Portionierkammer angeordnet ist. Das Granulat strömt also seitlich in die Portionierkammer ein. Die die Portionierkammer seitlich begrenzenden Seitenwände sind vorzugsweise plan bzw. krümmungsfrei ausgebildet. Die Portionierkammer wird vorzugsweise von zwei gegenüberliegenden Seitenwänden seitlich begrenzt, wobei die sich gegenüberliegenden Seitenwände parallel zueinander angeordnet sind.

In einer anderen bevorzugten Ausführungsform des erfindungsgemäßen Granulatportionierers ist das Verbindungsglied größtenteils oder vollständig auf einer der Einlassseite gegenüberliegenden Kammerseite der Portionierkammer angeordnet. Durch diese Anordnung des Verbindungsglieds ist der Axialabstand zwischen Einlassöffnung und Verbindungsglied vergleichsweise groß, sodass sich das Verbindungsglied während der Rotationsbewegung des Portionierrotors nicht unmittelbar an der Einlassöffnung vorbeibewegt. Es wird eine Verklemmungen verursachende Scherstelle an der Einlassöffnung vermieden. Im axialen Freiraum zwischen Verbindungsglied und Einlassöffnung werden Granulatverklemmungen im Bereich der Kanten der Einlassöffnung vermieden. Darüber hinaus kommt es zu einer erheblichen Verringerung des Verschleißes im Betrieb des Granulatportionierers. Es entstehen weniger Kornquerschläger, da die Granulatkörner seltener von dem Verbindungsglied getroffen werden. Somit wird die Anzahl von Granulatkörnern, die zwischen zwei Granulatportionen die Portionierkammer unbeabsichtigt verlassen, erheblich reduziert. Das Verbindungsglied weist vorzugsweise eine längliche Grundform auf.

In einer besonders bevorzugten Ausführungsform des erfindungsgemäßen Granulatportionierers weist die radial-äußere Kante der Einlassöffnung einen sich in Drehrichtung des Portionierrotors vergrößernden Abstand zur Umlaufbahn des Kontaktkörpers auf. Die Einlassöffnung liegt vorzugsweise in einem Bereich der Seitenwand, der nicht oder lediglich teilweise durch den Kontaktkörper überstrichen wird. Da die Einlassöffnung teilweise überstrichen wird, ist es vorteilhaft, wenn die Außenkante der Einlassöffnung radial zurückgenommen wird, sodass sich in Drehrichtung gesehen beim Überstreichen des Endes der Einlassöffnung keine Scherkante ergibt. Die radial-äußere Kante der Einlassöffnung weist in Drehrichtung des Portionierrotors einen flach ansteigenden Winkel auf. Es wird somit ein kontinuierlicher Übergang zwischen einem von der Kontaktfläche überstrichenen Bereich der Einlassöffnung und dem nicht-überstrichenen Bereich geschaffen.

In einer anderen Ausführungsform kann die die Portionierkammer axial und/oder radial begrenzende Bewandung des Gehäuses des Granulatportionierers alternativ oder zusätzlich zum rotorseitigen Ausweichmechanismus am Portionierrotor mit einem gehäuseseitigen Ausweichmechanismus ausgestattet sein. Beispielsweise ist die Seitenbewandung dazu eingerichtet, axiale Ausweichbewegungen auszuführen. Ferner kann die umlaufende Mantelfläche dazu eingerichtet sein, radiale und/oder axiale Ausweichbewegungen auszuführen.

Die der Erfindung zugrundeliegende Aufgabe wird ferner durch eine landwirtschaftliche Ausbringmaschine der eingangs genannten Art gelöst, wobei zumindest ein Granulatportionierer der erfindungsgemäßen landwirtschaftlichen Ausbringmaschine nach einer der vorstehend beschriebenen Ausführungsformen ausgebildet ist. Hinsichtlich der Vorteile und Modifikationen der erfindungsgemäßen landwirtschaftlichen Ausbringmaschine wird somit auf die Vorteile und Modifikationen des erfindungsgemäßen Granulatportionierers verwiesen.

Die der Erfindung zugrundeliegende Aufgabe wird ferner durch ein Verfahren der eingangs genannten Art gelöst, wobei der Kontaktkörper im Rahmen des erfindungsgemäßen Verfahrens mittels eines Ausweichmechanismus des Portionierrotors die Umlaufbahn während der Rotationsbewegung des Portionierrotors temporär verlässt, um Verklemmungen zwischen dem Portionierrotor und Granulatkörnern aufzulösen oder zu verhindern. Das Verfahren zum Erzeugen von Granulatportionen wird vorzugsweise mittels eines Granulatportionierers nach einer der vorstehend beschriebenen Ausführungsformen ausgeführt. Hinsichtlich der Vorteile und Modifikationen des erfindungsgemäßen Verfahrens wird somit auf die Vorteile und Modifikationen des erfindungsgemäßen Granulatportionierers verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Granulatportionierers in einer perspektivischen Darstellung;
- Fig. 2: den in der Fig. 1 abgebildeten Granulatportionierer in einer Schnittdarstellung;
- Fig. 3: ein Ausführungsbeispiel des erfindungsgemäßen Granulatportionierers in einer Schnittdarstellung;
- Fig. 4: den in der Fig. 3 abgebildeten Granulatportionierer mit einem ausgelenkten Kontaktkörper in einer Schnittdarstellung;
- Fig. 5: einen Portionierrotor eines erfindungsgemäßen Granulatportionierers in einer perspektivischen Darstellung;
- Fig. 6: eine Detaildarstellung des in der Fig. 5 abgebildeten Portionierrotors;
- Fig. 7: ein Ausführungsbeispiel des erfindungsgemäßen Granulatportionierers in einer Schnittdarstellung;
- Fig. 8: einen Kontaktkörper des in der Fig. 7 abgebildeten Granulatportionierers;
- Fig. 9: einen Kontaktkörper des in der Fig. 7 abgebildeten Granulatportionierers während einer Ausweichbewegung;
- Fig. 10: einen Kontaktkörper des in der Fig. 7 abgebildeten Granulatportionierers während einer Ausweichbewegung;
- Fig. 11: ein Ausführungsbeispiel des erfindungsgemäßen Granulatportionierers in einer perspektivischen Darstellung;
- Fig. 12: den in der Fig. 11 abgebildeten Granulatportionierer in einer Schnittdarstellung;
- Fig. 13: den in der Fig. 11 abgebildeten Granulatportionierer in einer weiteren Schnittdarstellung; und
- Fig. 14: den in der Fig. 11 abgebildeten Granulatportionierer in einer perspektivischen Darstellung.

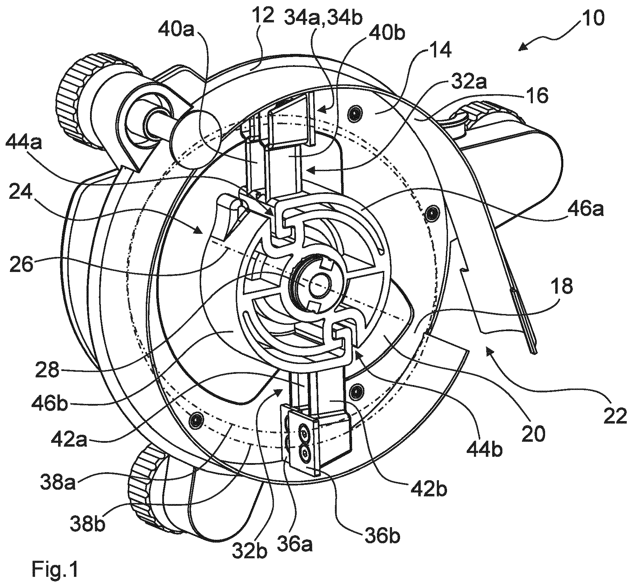

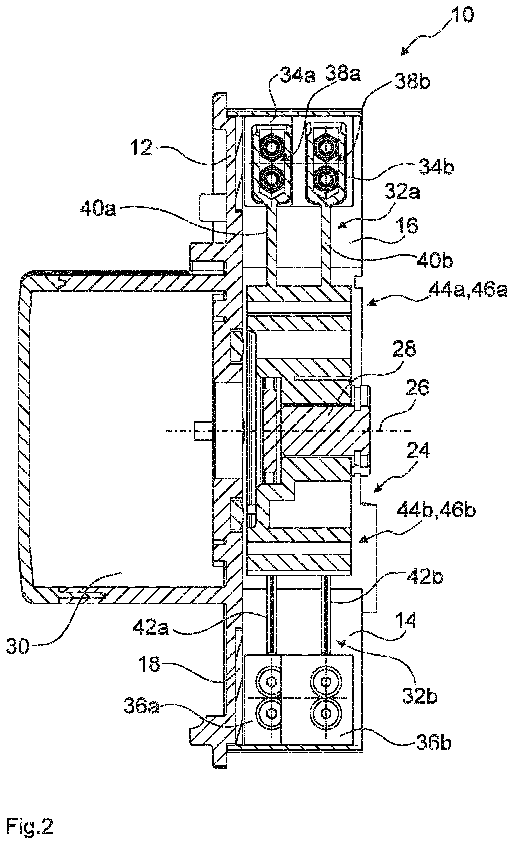

Die Fig. 1 und 2 zeigen einen Granulatportionierer 10, welcher zum Erzeugen von Düngerportionen eingesetzt werden kann. Der Granulatportionierer 10 ist somit ein Düngerportionierer.

Der Granulatportionierer 10 weist ein Gehäuse 12 auf, in welchem sich eine Portionierkammer 14 befindet. Die Portionierkammer 14 wird axial, also seitlich, von Seitenwänden 18 begrenzt. Die Begrenzung der Portionierkammer 14 in Radialrichtung erfolgt durch eine abschnittsweise umlaufende Mantelfläche 16. Die Mantelfläche 16 ist in einem Bereich durch die Auslassöffnung 22 unterbrochen.

In der Portionierkammer 14 werden im Betrieb des Granulatportionierers 10 Granulatportionen gebildet. Hierzu ist in der Portionierkammer 14 ein Portionierrotor 24 angeordnet, welcher während des Betriebs des Granulatportionierers 10 eine Rotationsbewegung um die Rotationsachse 26 ausführt. Der Portionierrotor 24 ist über die Nabe 28 mit einem Rotorantrieb 30 verbunden, welcher den Portionierrotor 24 rotatorisch antreibt.

Der Portionierrotor 24 weist zwei gegenüberliegende Portionierflügel 32a, 32b auf. Der Portionierflügel 32a umfasst zwei Kontaktkörper 34a, 34b, welche sich während einer Rotationsbewegung des Portionierrotors 24 entlang der Umlaufbahnen 38a, 38b bewegen. Der Portionierflügel 32b umfasst zwei Kontaktkörper 36a, 36b, welche sich während einer Rotationsbewegung des Portionierrotors 24 ebenfalls entlang der Umlaufbahnen 38a, 38b bewegen. Die Kontaktkörper 34a, 34b, 36a, 36b führen während der Rotationsbewegung des Portionierrotors 24 die in der Portionierkammer 14 befindlichen Granulatkörner G zu Granulatportionen zusammen. Die Granulatkörner G gelangen über die Einlassöffnung 20 in die Portionierkammer 14 des Granulatportionierers 10.

Die Kontaktkörper 34a, 34b sind über die Verbindungsglieder 40a, 40b und die Radialfederung 46a mit Nabe 28 verbunden. Die Kontaktkörper 36a, 36b sind über die Verbindungsglieder 42a, 42b und die Radialfederung 46b mit der Nabe 28 verbunden. Die Verbindungsglieder 40a, 40b, 42a, 42b und die Radialfederungen 46a, 46b sind Bestandteile eines Ausweichmechanismus des Portionierrotors 24. Der Ausweichmechanismus des Portionierrotors 24 erlaubt es den Kontaktkörpern 34a, 34b, 36a, 36b während der Rotationsbewegung des Portionierrotors 24 die Umlaufbahnen 38a, 38b zur Auflösung und/oder Vermeidung von Verklemmungen zwischen dem Portionierrotor 24 und Granulatkörnern G temporär zu verlassen. Die Kontaktkörper 34a, 34b, 36a, 36b können also eine Ausweichbewegung ausführen, wobei die Kontaktkörper 34a, 34b, 36a, 36b beim Ausführen der Ausweichbewegung die jeweilige Umlaufbahn 38a, 38b kurzzeitig verlassen. Die Umlaufbahnen 38a, 38b sind in diesem Fall Kreisbahnen. Die Granulatkörner G, welche von den Kontaktkörpern 34a, 34b, 36a, 36b zu Granulatportionen zusammengeführt werden, sind Düngerkörner.

Die Kontaktkörper 34a, 34b und die Kontaktkörper 36a, 36b bilden jeweils Kontaktkörperpaare. Die Kontaktkörper 34a, 34b, 36a, 36b eines Kontaktkörperpaares werden bei einer radialen Ausweichbewegung, welche durch die Radialfederungen 46a, 46b möglich sind, gemeinsam ausgelenkt. Durch die Einzelaufhängung der Kontaktkörper 34a, 34b, 36a, 36b über die Verbindungsglieder 40a, 40b, 42a, 42b können die Kontaktkörper 34a, 34b, 36a, 36b eines Kontaktkörperpaares unabhängig voneinander Ausweichbewegungen in Axialrichtung ausführen. Ein seitliches Ausweichen eines Kontaktkörpers 34a, 34b, 36a, 36b bedingt also nicht zwangsläufig ein seitliches Ausweichen eines anderen Kontaktkörpers 34a, 34b, 36a, 36b. Die Kontaktkörper 34a, 34b und die Kontaktkörper 36a, 36b überlappen sich in Axialrichtung abschnittsweise. Durch die Ausweichbewegung der Kontaktkörper 34a, 34b, 36a, 36b in Axialrichtung kann temporär eine Verringerung der Gesamtbreite der Kontaktkörperpaare herbeigeführt werden, wodurch es zur Spaltbildung zwischen einem Kontaktkörper 34a, 34b, 36a, 36b und einer Seitenwand 18 des Gehäuses 12 bzw. zu einer Spaltverbreiterung kommt. Durch die Spaltbildung bzw. Spaltverbreiterung können Kornverklemmungen verhindert und aufgelöst werden. Über die Radialfederungen 46a, 46b können die Kontaktkörper 34a, 34b, 36a, 36b eine radiale Ausweichbewegung zum Verlassen der Umlaufbahnen 38a, 38b während der Rotationsbewegung des Portionierrotors 24 ausführen. Somit erlaubt der Ausweichmechanismus des Granulatportionierers 10 eine radiale und eine axiale Ausweichbewegung der Kontaktkörper 34a, 34b, 36a, 36b zum Verlassen der Umlaufbahnen 38a, 38b während der Rotationsbewegung des Portionierrotors 24.

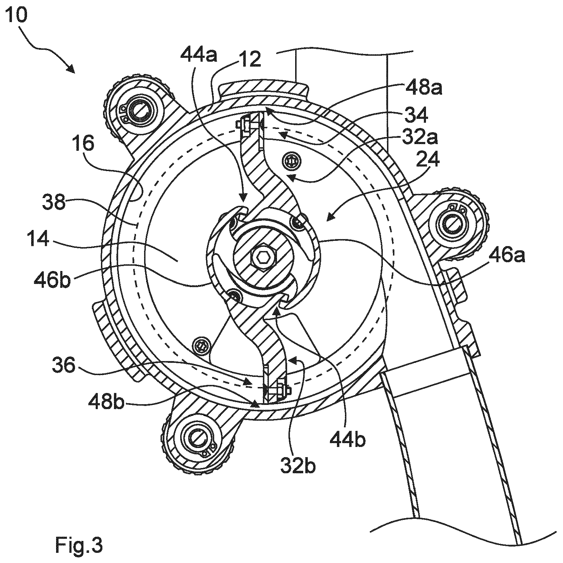

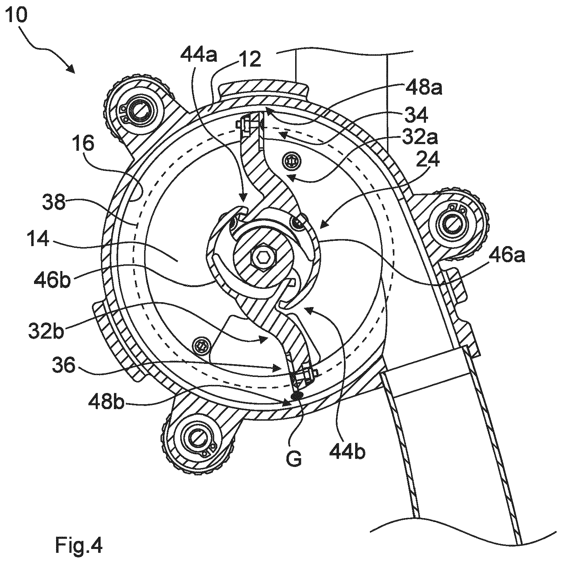

Die Fig. 3 und 4 zeigen einen Granulatportionierer 10, wobei sich die Kontaktkörper 34, 36 des Portionierrotors 24 in der Fig. 3 entlang der Umlaufbahn 38 bewegen. Anders als in den Fig. 1 und 2 umfassen die Portionierflügel 32a, 32b jeweils nur einen Kontaktkörper 34, 36. Bei dem in der Fig. 4 dargestellten Zustand führt der Kontaktkörper 36 eine Ausweichbewegung aus, sodass dieser die Umlaufbahn 38 temporär verlassen hat. Durch das Verlassen der Umlaufbahn 38 kann eine Verklemmung mit dem Granulatkorn G verhindert oder aufgelöst werden, da es zur Verbreiterung des Radialspalts 48b zwischen der radial-äußeren Kante des Kontaktkörpers 36 und der die Portionierkammer 14 radial begrenzenden Mantelfläche 16 kommt. Der Radialspalt 48a zwischen der radial-äußeren Kante des Kontaktkörpers 34 und der Mantelfläche 16 bleibt unverändert.

Der Ausweichmechanismus des Granulatportionierers 10 weist ferner Anschläge 44a, 44b auf, welche dafür sorgen, dass die Kontaktkörper 34, 36 nach dem Ausführen einer Ausweichbewegung wieder auf die Umlaufbahn 38 zurückgeführt werden. Die Rückfederung der Portionierflügel 32a, 32b wird durch die Anschläge 44a, 44b begrenzt, sodass sich nach Passieren des Granulatkorns G wieder die ursprüngliche Radialspaltbreite an der Außenkante des Kontaktkörpers 36 einstellt. Ferner wirken die Anschläge 44a, 44b somit auch auf die Kontaktkörper 34, 36 einwirkenden Fliehkräften entgegen, so dass die Kontaktkörper 34, 36 die Umlaufbahn 38 nicht in Radialrichtung nach außen verlassen.

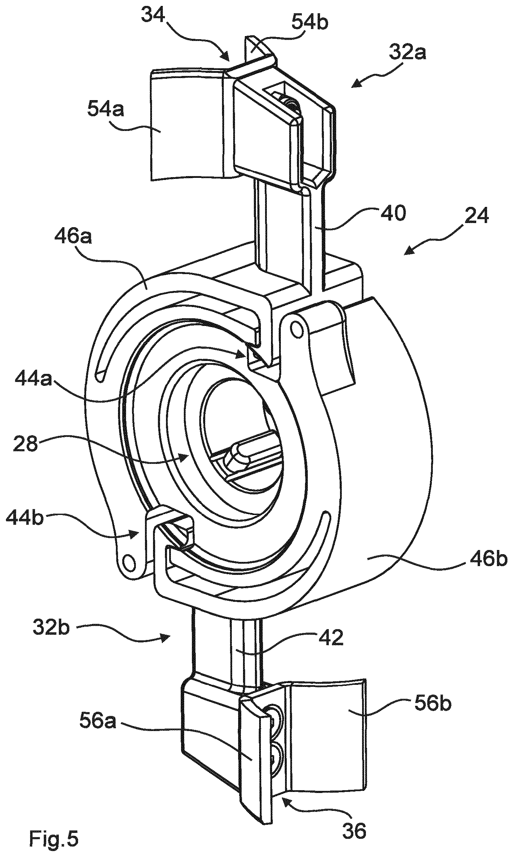

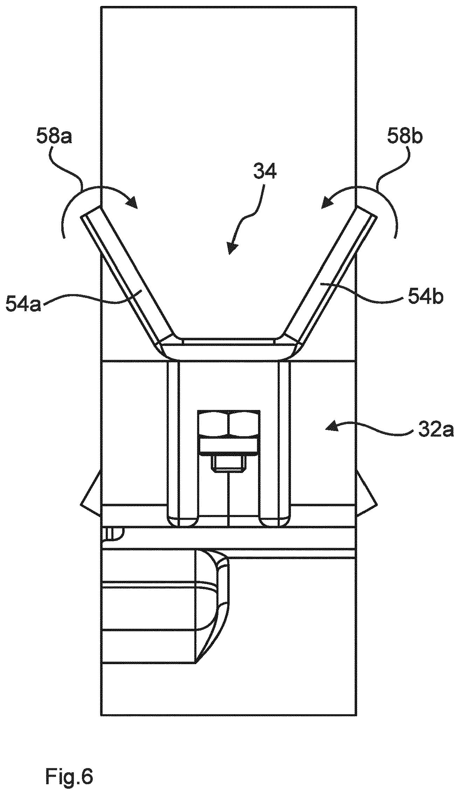

Die Fig. 5 und 6 zeigen einen Portionierrotor 24, bei welchem die Kontaktkörper 34, 36 über die Verbindungsglieder 40, 42 und die Radialfederungen 46a, 46b mit der Nabe 28 verbunden sind.

Die Kontaktkörper 34, 36 weisen jeweils beidseitig federnd bewegliche Seitenwangen 54a, 54b, 56a, 56b auf, welche ein Fortsetzen einer axialen Ausweichbewegung der Kontaktkörper 34, 36 in Richtung einer Seitenwand 18 der Portionierkammer 14 auch nach In-Kontakt-Kommen einer Seitenwange 54a, 54b, 56a, 56b mit einer Seitenwand 18 ermöglichen. Die Kontaktkörper 34, 36 weisen in dem dargestellten Ausführungsbeispiel eine Schaufelform auf. Die Seitenwangen 54a, 54b, 56a, 56b sind aus einem elastischen Material, vorliegend Federstahl, ausgebildet, sodass diese federnd nach innen gedrückt werden können. Die Schaufelform der Kontaktkörper 34, 36 weist in dem dargestellten Ausführungsbeispiel keine Rückwand auf. Bei einem Wandkontakt aufgrund einer axialen Ausweichbewegung eines Kontaktkörpers 34, 36 können die Seitenwangen 54a, 54b, 56a, 56b also eine nach innen gerichtete Federbewegung 58a, 58b ausführen. Nach Auflösen einer Verklemmung bzw. dem Passieren des kritischen Granulatkorns G sorgt eine federbedingte Rückstellkraft dafür, dass die Seitenwangen 54a, 54b, 56a, 56b wieder in ihre Ausgangsposition zurückbewegt werden.

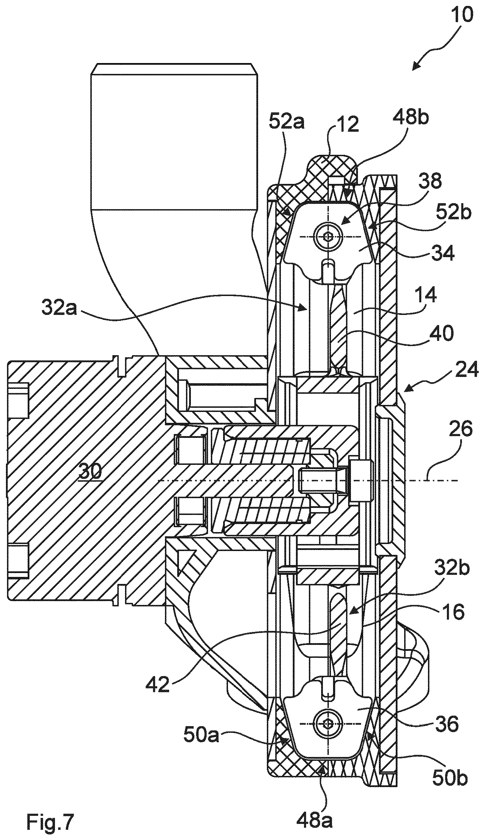

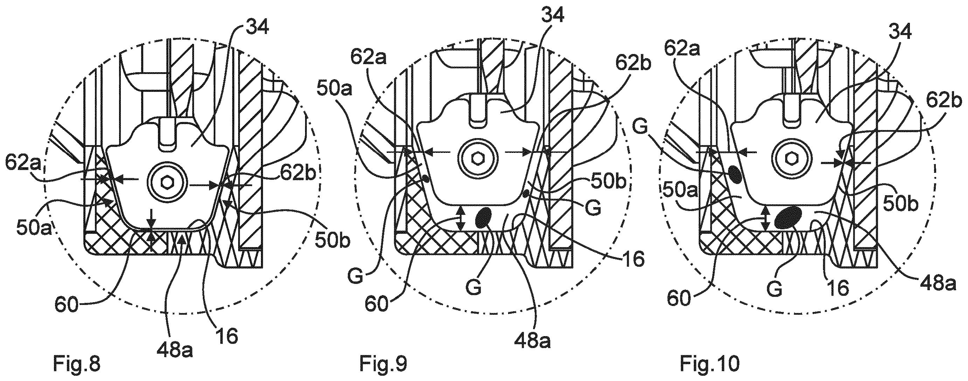

Die Fig. 7 zeigt einen Granulatportionierer 10, bei welchem die Portionierkammer 14 in der Umgebung der Umlaufbahn 38 der Kontaktkörper 34, 36 von einer teilweise umlaufenden Mantelfläche 16 radial und axial begrenzt wird. Unter Berücksichtigung der Fig. 8 ergibt sich, dass der Portionierrotor 24 derart in der Portionierkammer 14 angeordnet ist, dass sich zwischen den radial-äußeren Kanten der Kontaktkörper 34, 36 und dem die Portionierkammer 14 radial begrenzenden Teilbereich der Mantelfläche 16 bei einer Rotationsbewegung des Portionierrotors 24 Radialspalten 48a, 48b ergeben. Ferner ist der Portionierrotor 24 derart in der Portionierkammer 14 angeordnet, dass sich zwischen den axial-äußeren Kanten der Kontaktkörper 34, 36 und den die Portionierkammer 14 axial begrenzenden Teilbereichen der Mantelfläche 16 bei einer Rotationsbewegung des Portionierrotors 24 Axialspalten 50a, 50b, 52a, 52b ergeben. Die äußeren Kanten der Kontaktkörper 34, 36 und die Mantelfläche 16 verlaufen parallel zueinander. Die axial-äußeren Kanten der Kontaktkörper 34, 36 und die die Portionierkammer 14 axial begrenzenden Teilbereiche der Mantelfläche 16 sind nach außen geneigt.

Die Fig. 9 zeigt, dass der Portionierrotor 24 derart in der Portionierkammer 14 angeordnet ist, dass sich die Spaltbreite 60 des Radialspalts 48a bei einer Ausweichbewegung des Kontaktkörpers 34 in Radialrichtung verändert. Wenn sich der Kontaktkörper 34 radial nach innen bewegt, wird der Radialspalt 48a verbreitert. Auf diese Weise können Kornverklemmungen an der radial-äußeren Kante des Kontaktkörpers 34 durch eine Ausweichbewegung aufgelöst werden. Die Fig. 9 zeigt außerdem, dass der Portionierrotor 24 derart in der Portionierkammer 14 angeordnet ist, dass sich die Spaltbreiten 62a, 62b der Axialspalten 50a, 50b bei einer Ausweichbewegung des Kontaktkörpers 34 in Radialrichtung verändern. Bei einer radial nach innen gerichteten Ausweichbewegung des Kontaktkörpers 34 werden die Axialspalten 50a, 50b vergrößert.

Die Fig. 10 zeigt, dass die radiale Ausweichbewegung des Kontaktkörpers 34 mit einer zusätzlichen axialen Ausweichbewegung des Kontaktkörpers 34 kombiniert werden kann. Durch die axial federnden Verbindungsglieder 40, 42 können die Kontaktkörper 34, 36 also auch axiale Ausweichbewegungen ausführen, um Kornverklemmungen zu verhindern oder auszulösen. Bei einer axialen Ausweichbewegung wird die Spaltbreite 62b eines Axialspalts 50b verringert, wobei gleichzeitig die Spaltbreite 62a des gegenüberliegenden Axialspalts 50a vergrößert wird. Somit können Verklemmungen durch Granulatkörner G an den axial-äußeren Kanten der Kontaktkörper 34, 36 durch eine radiale und/oder durch eine axiale Ausweichbewegung der Kontaktkörper 34, 36 aufgelöst werden.

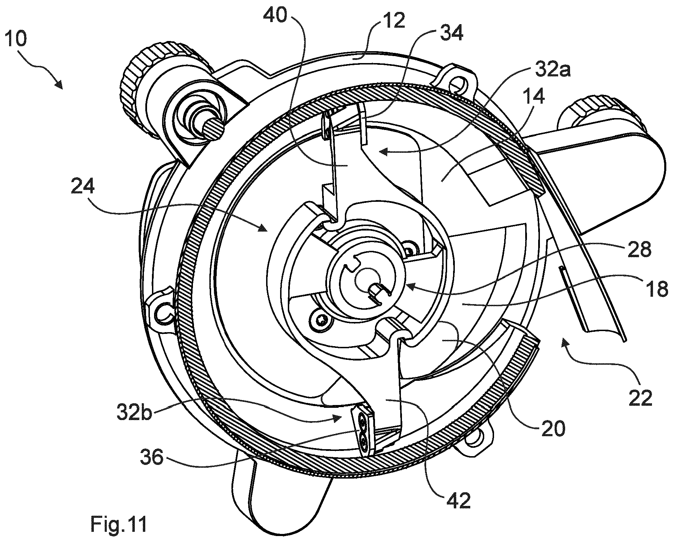

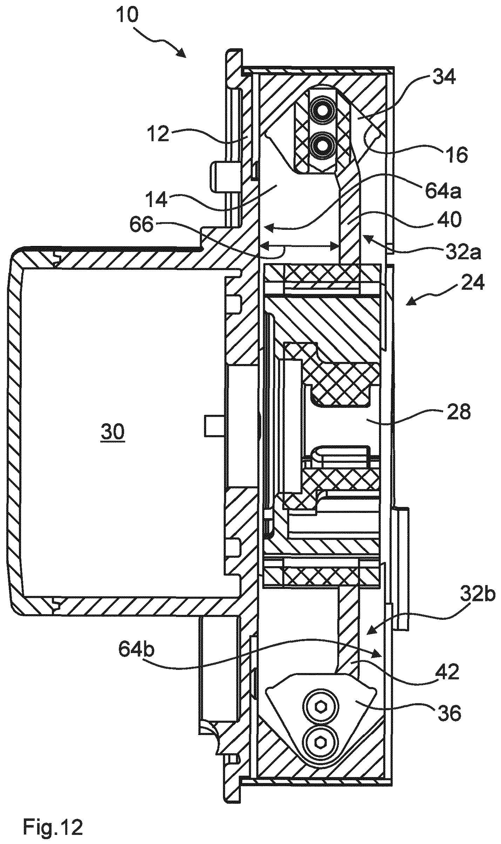

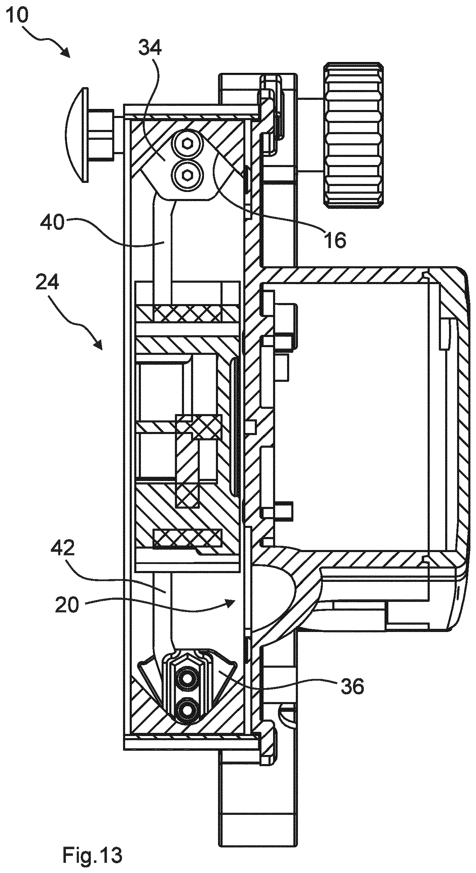

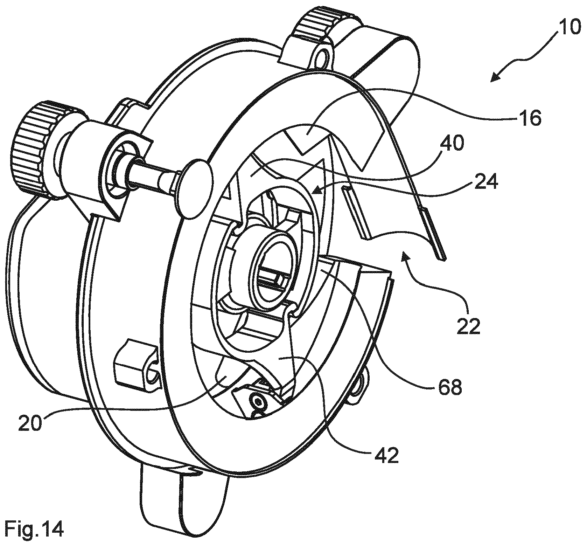

Die Fig. 11 bis 14 zeigen einen Granulatportionierer 10, bei welchem die Kontaktkörper 34, 36 jeweils über ein Verbindungsglied 40, 42 eines Portionierflügels 32a, 32b mit einer Nabe 28 des Portionierrotors 24 verbunden sind. Die Verbindungsglieder 40, 42 weisen eine geringere Breite, also eine geringere Erstreckung in Axialrichtung, als die Kontaktkörper 34, 36 auf. Die Breite der Verbindungsglieder 40, 42 beträgt weniger als die Hälfte der Breite der Kontaktkörper 34, 36. Die Verbindungsglieder 40, 42 sind derart schmal ausgebildet, dass durch die Verbindungsglieder 40, 42 verursachte Kornquerschläger in Umfangsrichtung erheblich reduziert werden. Damit wird die Anzahl von Granulatkörnern G, welche die Portionierkammer 14 zwischen einzelnen Granulatportionen verlassen, erheblich reduziert.

Die Portionierkammer 14 weist eine Einlassöffnung 20 auf, über welche Granulat in die Portionierkammer 14 eintreten kann. Die Einlassöffnung 20 ist in einer die Portionierkammer 14 auf einer Einlassseite 64a seitlich begrenzenden Seitenwand 18 der Portionierkammer 14 angeordnet. Die Verbindungsglieder 40, 42 sind vollständig auf einer der Einlassseite 64a gegenüberliegenden Kammerseite 64b der Portionierkammer 14 angeordnet. Durch die axiale Beabstandung der Einlassöffnung 20 und der Verbindungsglieder 40, 42 entsteht ein Freiraum 66. Die Verbindungsglieder 40, 42 werden also während der Rotationsbewegung des Portionierrotors 24 nicht unmittelbar an der Einlassöffnung 20 vorbei bewegt. Es entsteht keine Scherstelle an der Einlassöffnung 20, welche zu Verklemmungen oder zusätzlichem Verschleiß der Einlassöffnung 20 führen könnte. Durch den Freiraum 66 werden ferner Kornquerschläger durch ein unbeabsichtigtes In-Kontakt-Kommen der Verbindungsglieder 40, 42 mit Granulatkörnern G im Bereich der Einlassöffnung 20 vermieden.

Ferner weist die radial-äußere Kante der Einlassöffnung 20 ein sich in Drehrichtung des Portionierrotors 24 vergrößernden Abstand zur Umlaufbahn 38 der Kontaktkörper 34, 36 auf. Es wird ein kontinuierlicher Übergang zwischen dem von den Kontaktkörpern 34, 36 überstrichenen Bereich der Einlassöffnung 20 und dem von den Kontaktkörpern 34, 36 nicht überstrichenen Bereich geschaffen.

Die Mantelfläche 16 des Granulatportionierers 10 weist ferner einen V-förmigen Querschnitt auf. Der V-förmige Querschnitt baut sich in dem hinter der Auslassöffnung 22 befindenden Abschnitt der Mantelfläche 16 kontinuierlich auf.

Dies wird über eine sichelförmige Fläche 68 im Nahbereich der Auslassöffnung 22 umgesetzt.

### Bezugszeichenliste

- 10: Granulatportionierer
- 12: Gehäuse
- 14: Portionierkammer
- 16: Mantelfläche
- 18: Seitenwand
- 20: Einlassöffnung
- 22: Auslassöffnung
- 24: Portionierrotor
- 26: Rotationsachse
- 28: Nabe
- 30: Rotorantrieb
- 32a, 32b: Portionierflügel
- 34, 34a, 34b: Kontaktkörper
- 36, 36a, 36b: Kontaktkörper
- 38, 38a, 38b: Umlaufbahnen
- 40, 40a, 40b: Verbindungsglieder
- 42, 42a, 42b: Verbindungsglieder
- 44a, 44b: Anschläge
- 46a, 46b: Radialfederungen
- 48a, 48b: Radialspalt
- 50a, 50b: Axialspalten
- 52a, 52b: Axialspalten
- 54a, 54b: Seitenwangen
- 56a, 56b: Seitenwangen
- 58a, 58b: Federbewegungen
- 60: Spaltbreite
- 62a ,62b: Spaltbreiten
- 64a, 64b: Kammerseite
- 66: Freiraum
- 68: Fläche
- G: Granulatkörner

## Patentansprüche

1. Granulatportionierer (10) für eine landwirtschaftliche Ausbringmaschine, mit
- einer Portionierkammer (14) zur Bildung von Granulatportionen; und
- einem in der Portionierkammer (14) angeordneten Portionierrotor (24), welcher zumindest einen Kontaktkörper (34, 34a, 34b, 36, 36a, 36b) aufweist, wobei der Kontaktkörper (34, 34a, 34b, 36, 36a, 36b) dazu eingerichtet ist, sich während einer Rotationsbewegung des Portionierrotors (24) entlang einer Umlaufbahn (38, 38a, 38b) zu bewegen und in der Portionierkammer (14) befindliche Granulatkörner (G) zu einer Granulatportion zusammenzuführen;
**dadurch gekennzeichnet, dass** der Portionierrotor (24) einen Ausweichmechanismus aufweist, welcher es dem Kontaktkörper (34, 34a, 34b, 36, 36a, 36b) während der Rotationsbewegung des Portionierrotors (24) erlaubt, die Umlaufbahn (38, 38a, 38b) zur Auflösung und/oder Vermeidung von Verklemmungen zwischen dem Portionierrotor (24) und Granulatkörnern (G) temporär zu verlassen.

2. Granulatportionierer (10) nach Anspruch 1,
**dadurch gekennzeichnet, dass** der Ausweichmechanismus eine radiale Ausweichbewegung und/oder eine axiale Ausweichbewegung des Kontaktkörpers (34, 34a, 34b, 36, 36a, 36b) zum Verlassen der Umlaufbahn (38, 38a, 38b) während einer Rotationsbewegung des Portionierrotors (24) zulässt.

3. Granulatportionierer (10) nach Anspruch 2,
**dadurch gekennzeichnet, dass** der Ausweichmechanismus eine mit dem Kontaktkörper (34, 34a, 34b, 36, 36a, 36b) verbundene Radialfederung (46a, 46b) aufweist, welche die radiale Ausweichbewegung des Kontaktkörpers (34, 34a, 34b, 36, 36a, 36b) zum Verlassen der Umlaufbahn (38, 38a, 38b) während einer Rotationsbewegung des Portionierrotors (24) zulässt.

4. Granulatportionierer (10) nach einem der vorstehenden Ansprüche,
**dadurch gekennzeichnet, dass** der Portionierrotor (24) zumindest einen Portionierflügel (32a ,32b) umfasst, wobei der Portionierflügel (32a ,32b) zwei relativ zueinander bewegliche Kontaktkörper (34, 34a, 34b, 36, 36a, 36b) aufweist, wobei der Ausweichmechanismus axiale Ausweichbewegungen der zwei Kontaktkörper (34, 34a, 34b, 36, 36a, 36b) zulässt, durch welche die zwei Kontaktkörper (34, 34a, 34b, 36, 36a, 36b), vorzugsweise unabhängig voneinander, deren Umlaufbahn (38, 38a, 38b) während einer Rotationsbewegung des Portionierrotors (24) temporär verlassen können.

5. Granulatportionierer (10) nach einem der vorstehenden Ansprüche,
**dadurch gekennzeichnet, dass** der Kontaktkörper (34, 34a, 34b, 36, 36a, 36b) einseitig oder beidseitig elastisch verformbare oder federnd bewegliche Seitenwangen (54a, 54b, 56a, 56b) aufweist, welche ein Fortsetzen einer axialen Ausweichbewegung des Kontaktkörpers (34, 34a, 34b, 36, 36a, 36b) in Richtung einer Seitenwand (18) der Portionierkammer (14) auch nach In-Kontakt-Kommen einer Seitenwange (54a, 54b, 56a, 56b) mit einer Seitenwand (18) ermöglichen.

6. Granulatportionierer (10) nach einem der vorstehenden Ansprüche,
**dadurch gekennzeichnet, dass** die Portionierkammer (14) in der Umgebung der Umlaufbahn (38, 38a, 38b) von einer zumindest teilweise umlaufenden Mantelfläche (16) zumindest abschnittsweise radial und/oder axial begrenzt wird, wobei der Portionierrotor (24) derart in der Portionierkammer (14) angeordnet ist, dass
- sich zwischen der radial-äußeren Kante des Kontaktkörpers (34, 34a, 34b, 36, 36a, 36b) und einem die Portionierkammer (14) zumindest abschnittsweise radial begrenzenden Teilbereich der Mantelfläche (16) ein Radialspalt (48a, 48b) und/oder zwischen den axial-äußeren Kanten des Kontaktkörpers (34, 34a, 34b, 36, 36a, 36b) und die Portionierkammer (14) zumindest abschnittsweise axial begrenzenden Teilbereichen der Mantelfläche (16) Axialspalten (50a, 50b, 52a, 52b) bei der Rotationsbewegung des Portionierrotors (24) ergeben, und
- sich die Spaltbreite (60) des Radialspalts (48a, 48b) und/oder der Axialspalten (50a, 50b, 52a, 52b) bei einer Ausweichbewegung des Kontaktkörpers (34, 34a, 34b, 36, 36a, 36b) verändert.

7. Granulatportionierer (10) nach Anspruch 6,
**dadurch gekennzeichnet, dass** der Portionierrotor (24) derart in der Portionierkammer (14) angeordnet ist, dass
- sich die Spaltbreite (60) des Radialspalts (48a, 48b) bei einer Ausweichbewegung des Kontaktkörpers (34, 34a, 34b, 36, 36a, 36b) in Axialrichtung und/oder bei einer Ausweichbewegung des Kontaktkörpers (34, 34a, 34b, 36, 36a, 36b) in Radialrichtung verändert; und/oder
- sich die Spaltbreiten (62a, 62b) der Axialspalten (50a, 50b, 52a, 52b) bei einer Ausweichbewegung des Kontaktkörpers (34, 34a, 34b, 36, 36a, 36b) in Axialrichtung und/oder bei einer Ausweichbewegung des Kontaktkörpers (34, 34a, 34b, 36, 36a, 36b) in Radialrichtung verändern.

8. Granulatportionierer (10) nach Anspruch 6 oder 7,
**dadurch gekennzeichnet, dass** zumindest eine axial-äußere Kante des Kontaktkörpers (34, 34a, 34b, 36, 36a, 36b) nach außen geneigt ist, sodass sich der Axialspalt (50a, 50b, 52a, 52b) zwischen der axial-äußeren Kante des Kontaktkörpers (34, 34a, 34b, 36, 36a, 36b) und einem die Portionierkammer (14) zumindest abschnittsweise axial begrenzenden Teilbereich der Mantelfläche (16) bei einer radial nach innen gerichteten Ausweichbewegung des Kontaktkörpers (34, 34a, 34b, 36, 36a, 36b) gemeinsam mit dem Radialspalt (48a, 48b) vergrößert.

9. Granulatportionierer (10) nach einem der Ansprüche 6 bis 8,
**dadurch gekennzeichnet, dass** zumindest ein die Portionierkammer (14) zumindest abschnittsweise axial begrenzender Teilbereich der Mantelfläche (16) nach außen geneigt ist, sodass sich der Axialspalt (50a, 50b, 52a, 52b) zwischen der axial-äußeren Kante des Kontaktkörpers (34, 34a, 34b, 36, 36a, 36b) und dem die Portionierkammer (14) zumindest abschnittsweise axial begrenzenden Teilbereich der Mantelfläche (16) bei einer radial nach innen gerichteten Ausweichbewegung des Kontaktkörpers (34, 34a, 34b, 36, 36a, 36b) gemeinsam mit dem Radialspalt (48a, 48b) vergrößert.

10. Granulatportionierer (10) nach einem der vorstehenden Ansprüche,
**dadurch gekennzeichnet, dass** der Kontaktkörper (34, 34a, 34b, 36, 36a, 36b) über ein Verbindungsglied (40, 40a, 40b, 42, 42a, 42b) eines Portionierflügels (32a ,32b) mit einer Nabe (28) des Portionierrotors (24) verbunden ist.

11. Granulatportionierer (10) nach einem der vorstehenden Ansprüche,
**dadurch gekennzeichnet, dass** die Portionierkammer (14) eine Einlassöffnung (20) aufweist, über welche Granulat in die Portionierkammer (14) eintreten kann, wobei die Einlassöffnung (20) in einer die Portionierkammer (14) auf einer Einlassseite (64a) seitlich begrenzenden Seitenwand (18) der Portionierkammer (14) angeordnet ist.

12. Granulatportionierer (10) nach Anspruch 10 und 11,
**dadurch gekennzeichnet, dass** das Verbindungsglied (40, 40a, 40b, 42, 42a, 42b) größtenteils oder vollständig auf einer der Einlassseite (64a) gegenüberliegenden Kammerseite (64b) der Portionierkammer (14) angeordnet ist.

13. Granulatportionierer (10) nach Anspruch 11 oder 12,
**dadurch gekennzeichnet, dass** die radial-äußere Kante der Einlassöffnung (20) einen sich in Drehrichtung des Portionierrotors (24) vergrößernden Abstand zur Umlaufbahn (38, 38a, 38b) des Kontaktkörpers (34, 34a, 34b, 36, 36a, 36b) aufweist.

14. Landwirtschaftliche Ausbringmaschine zum Ausbringen von Granulatportionen auf eine landwirtschaftliche Nutzfläche, mit
- mehreren Granulatportionierern (10) zum Erzeugen von Granulatportionen;
**dadurch gekennzeichnet, dass** zumindest ein Granulatportionierer (10) nach einem der vorstehenden Ansprüche ausgebildet ist.

15. Verfahren zum Erzeugen von Granulatportionen mittels eines Granulatportionierers (10), insbesondere mittels eines Granulatportionierers (10) nach einem der Ansprüche 1 bis 13, mit den Schritten:
- Einleiten von Granulat in eine Portionierkammer (14) des Granulatportionierers (10),
- rotatorisches Antreiben eines in der Portionierkammer angeordneten Portionierrotors (24); und
- Zusammenführen von sich in der Portionierkammer (14) befindlichen Granulatkörnern (G) mittels eines sich während einer Rotationsbewegung des Portionierrotors (24) entlang einer Umlaufbahn (38, 38a, 38b) bewegenden Kontaktkörpers (34, 34a, 34b, 36, 36a, 36b) des Portionierrotors (24);
**dadurch gekennzeichnet, dass** der Kontaktkörper (34, 34a, 34b, 36, 36a, 36b) mittels eines Ausweichmechanismus des Portionierrotors (24) die Umlaufbahn (38, 38a, 38b) während der Rotationsbewegung des Portionierrotors (24) temporär verlässt, um Verklemmungen zwischen dem Portionierrotor (24) und Granulatkörnern (G) aufzulösen oder zu verhindern.

## Claims

1. Granulate portioner (10) for an agricultural spreading machine, the granulate portioner comprising
- a portioning chamber (14) for the formation of granulate portions; and
- a portioning rotor (24) which is arranged in the portioning chamber (14) and has at least one contact body (34, 34a, 34b, 36, 36a, 36b), the contact body (34, 34a, 34b, 36, 36a, 36b) being designed to move along a circular path (38, 38a, 38b) during a rotational movement of the portioning rotor (24) and to combine granules (G) located in the portioning chamber (14) into a granulate portion;
**characterized in that** the portioning rotor (24) has an escape mechanism which allows the contact body (34, 34a, 34b, 36, 36a, 36b) to temporarily leave the circular path (38, 38a, 38b) during the rotational movement of the portioning rotor (24) in order to resolve and/or prevent jamming between the portioning rotor (24) and granules (G).

2. Granulate portioner (10) according to claim 1,
**characterized in that** the evasive mechanism allows a radial evasive movement and/or an axial evasive movement of the contact body (34, 34a, 34b, 36, 36a, 36b) in order to leave the circular path (38, 38a, 38b) during a rotational movement of the portioning rotor (24).

3. Granulate portioner (10) according to claim 2,
**characterized in that** the evasive mechanism has a radial spring (46a, 46b) which is connected to the contact body (34, 34a, 34b, 36, 36a, 36b) and which allows the radial evasive movement of the contact body (34, 34a, 34b, 36, 36a, 36b) in order to leave the circular path (38, 38a, 38b) during a rotational movement of the portioning rotor (24).

4. Granulate portioner (10) according to any of the preceding claims,
**characterized in that** the portioning rotor (24) comprises at least one portioning wing (32a, 32b), the portioning wing (32a, 32b) having two contact bodies (34, 34a, 34b, 36, 36a, 36b) which are movable relative to one another, the evasive mechanism allowing axial evasive movements of the two contact bodies (34, 34a, 34b, 36, 36a, 36b), by means of which movements the two contact bodies (34, 34a, 34b, 36, 36a, 36b), preferably independently of one another, can temporarily leave their circular path (38, 38a, 38b) during a rotational movement of the portioning rotor (24).

5. Granulate portioner (10) according to any of the preceding claims,
**characterized in that** the contact body (34, 34a, 34b, 36, 36a, 36b) has side cheeks (54a, 54b, 56a, 56b) that are elastically deformable or resiliently movable on one or both sides and allow a continuation of an axial evasive movement of the contact body (34, 34a, 34b, 36, 36a, 36b) in the direction of a side wall (18) of the portioning chamber (14) even after a side cheek (54a, 54b, 56a, 56b) has come into contact with a side wall (18).

6. Granulate portioner (10) according to any of the preceding claims,
**characterized in that**, in the vicinity of the circular path (38, 38a, 38b), the portioning chamber (14) is delimited radially and/or axially, at least in some portions, by a skin surface (16) that is at least partially circumferential, the portioning rotor (24) being arranged in the portioning chamber (14) such that
- a radial gap (48a, 48b) forms between the radial-outer edge of the contact body (34, 34a, 34b, 36, 36a, 36b) and a sub-region of the skin surface (16), which sub-region radially delimits the portioning chamber (14) at least in some portions, and/or axial gaps (50a, 50b, 52a, 52b) form between the axial-outer edges of the contact body (34, 34a, 34b, 36, 36a, 36b) and sub-regions of the skin surface (16), which sub-regions axially delimit the portioning chamber (14) at least in some portions, during the rotational movement of the portioning rotor (24), and
- the gap width (60) of the radial gap (48a, 48b) and/or of the axial gaps (50a, 50b, 52a, 52b) changes during an evasive movement of the contact body (34, 34a, 34b, 36, 36a, 36b).

7. Granulate portioner (10) according to claim 6,
**characterized in that** the portioning rotor (24) is arranged in the portioning chamber (14) such that
- the gap width (60) of the radial gap (48a, 48b) changes during an evasive movement of the contact body (34, 34a, 34b, 36, 36a, 36b) in the axial direction and/or during an evasive movement of the contact body (34, 34a, 34b, 36, 36a, 36b) in the radial direction; and/or
- the gap widths (62a, 62b) of the axial gaps (50a, 50b, 52a, 52b) change during an evasive movement of the contact body (34, 34a, 34b, 36, 36a, 36b) in the axial direction and/or during an evasive movement of the contact body (34, 34a, 34b, 36, 36a, 36b) in the radial direction.

8. Granulate portioner (10) according to claim 6 or 7,
**characterized in that** at least one axial-outer edge of the contact body (34, 34a, 34b, 36, 36a, 36b) is inclined outward so that the axial gap (50a, 50b, 52a, 52b) between the axial-outer edge of the contact body (34, 34a, 34b, 36, 36a, 36b) and a sub-region of the skin surface (16), which sub-region axially delimits the portioning chamber (14), at least in some portions, increases together with the radial gap (48a, 48b) during a radially inward-directed evasive movement of the contact body (34, 34a, 34b, 36, 36a, 36b).

9. Granulate portioner (10) according to any of claims 6 to 8,
**characterized in that** at least one sub-region of the skin surface (16), which sub-region axially delimits the portioning chamber (14) at least in some portions, is inclined outward so that the axial gap (50a, 50b, 52a, 52b) between the axial-outer edge of the contact body (34, 34a, 34b, 36, 36a, 36b) and the sub-region of the skin surface (16), which sub-region axially delimits the portioning chamber (14), at least in some portions, increases together with the radial gap (48a, 48b) during a radially inward-directed evasive movement of the contact body (34, 34a, 34b, 36, 36a, 36b).

10. Granulate portioner (10) according to any of the preceding claims,
**characterized in that** the contact body (34, 34a, 34b, 36, 36a, 36b) is connected via a connecting element (40, 40a, 40b, 42, 42a, 42b) of a portioning wing (32a, 32b) to a hub (28) of the portioning rotor (24).

11. Granulate portioner (10) according to any of the preceding claims,
**characterized in that** the portioning chamber (14) has an inlet opening (20) through which granulate can enter the portioning chamber (14), the inlet opening (20) being arranged in a side wall (18) of the portioning chamber (14) which laterally delimits the portioning chamber (14) on an inlet side (64a).

12. Granulate portioner (10) according to claim 10 and 11,
**characterized in that** the connecting element (40, 40a, 40b, 42, 42a, 42b) is largely or completely arranged on a chamber side (64b) of the portioning chamber (14) which is opposite the inlet side (64a).

13. Granulate portioner (10) according to claim 11 or 12,
**characterized in that** the radial-outer edge of the inlet opening (20) has a distance to the circular path (38, 38a, 38b) of the contact body (34, 34a, 34b, 36, 36a, 36b) which increases in the direction of rotation of the portioning rotor (24).

14. Agricultural spreading machine for spreading granulate portions onto an agriculturally productive land, comprising
- multiple granulate portioners (10) for producing granulate portions;
**characterized in that** at least one granulate portioner (10) is designed according to any of the preceding claims.

15. Method for producing granulate portions by means of a granulate portioner (10), in particular by means of a granulate portioner (10) according to any of claims 1 to 13, comprising the steps of:
- introducing granulate into a portioning chamber (14) of the granulate portioner (10),
- rotary driving of a portioning rotor (24) which is arranged in the portioning chamber; and
- combining granules (G) located in the portioning chamber (14) by means of a contact body (34, 34a, 34b, 36, 36a, 36b) of the portioning rotor (24), which body moves along a circular path (38, 38a, 38b) during a rotational movement of the portioning rotor (24);
**characterized in that** the contact body (34, 34a, 34b, 36, 36a, 36b) temporarily leaves the circular path (38, 38a, 38b) during the rotational movement of the portioning rotor (24) by means of an evasive mechanism of the portioning rotor (24) in order to resolve or prevent jamming between the portioning rotor (24) and granules (G).

## Revendications

1. Portionneuse de granulés (10) pour une machine d'épandage agricole, comportant
- une chambre de portionnement (14) destinée à former des portions de granulés ; et
- un rotor de portionnement (24) agencé dans la chambre de portionnement (14) et présentant au moins un corps de contact (34, 34a, 34b, 36, 36a, 36b), le corps de contact (34, 34a, 34b, 36, 36a, 36b) étant conçu pour effectuer un mouvement, pendant un mouvement de rotation du rotor de portionnement (24), le long d'une trajectoire (38, 38a, 38b) et pour rassembler des grains de granulés (G) se trouvant dans la chambre de portionnement (14) en une portion de granulés ;
**caractérisée en ce que** le rotor de portionnement (24) présente un mécanisme d'écartement qui permet au corps de contact (34, 34a, 34b, 36, 36a, 36b) de quitter temporairement la trajectoire (38, 38a, 38b) afin d'éliminer et/ou d'éviter des blocages entre le rotor de portionnement (24) et les grains de granulés (G) pendant le mouvement de rotation du rotor de portionnement (24).

2. Portionneuse de granulés (10) selon la revendication 1,
**caractérisée en ce que** le mécanisme d'écartement permet un mouvement d'écartement radial et/ou un mouvement d'écartement axial du corps de contact (34, 34a, 34b, 36, 36a, 36b) afin de quitter la trajectoire (38, 38a, 38b) pendant un mouvement de rotation du rotor de portionnement (24).

3. Portionneuse de granulés (10) selon la revendication 2,
**caractérisée en ce que** le mécanisme d'écartement présente une suspension radiale (46a, 46b) reliée au corps de contact (34, 34a, 34b, 36, 36a, 36b), qui permet le mouvement d'écartement radial du corps de contact (34, 34a, 34b, 36, 36a, 36b) afin de quitter la trajectoire (38, 38a, 38b) pendant un mouvement de rotation du rotor de portionnement (24).

4. Portionneuse de granulés (10) selon l'une des revendications précédentes,
**caractérisée en ce que** le rotor de portionnement (24) comprend au moins une ailette de portionnement (32a, 32b), l'ailette de portionnement (32a, 32b) présentant deux corps de contact (34, 34a, 34b, 36, 36a, 36b) mobiles l'un par rapport à l'autre, le mécanisme d'écartement permettant des mouvements d'écartement axiaux des deux corps de contact (34, 34a, 34b, 36, 36a, 36b), grâce auxquels les deux corps de contact (34, 34a, 34b, 36, 36a, 36b) peuvent, de préférence indépendamment l'un de l'autre, quitter temporairement leur trajectoire (38, 38a, 38b) pendant un mouvement de rotation du rotor de portionnement (24).

5. Portionneuse de granulés (10) selon l'une des revendications précédentes,
**caractérisée en ce que** le corps de contact (34, 34a, 34b, 36, 36a, 36b) présente, d'un côté ou des deux côtés, des joues latérales (54a, 54b, 56a, 56b) élastiquement déformables ou mobiles à ressort qui permettent une poursuite d'un mouvement d'écartement axial du corps de contact (34, 34a, 34b, 36, 36a, 36b) en direction d'une paroi latérale (18) de la chambre de portionnement (14), même après l'entrée en contact d'une joue latérale (54a, 54b, 56a, 56b) avec une paroi latérale (18).

6. Portionneuse de granulés (10) selon l'une des revendications précédentes,
**caractérisée en ce que** la chambre de portionnement (14) est délimitée, au voisinage de la trajectoire (38, 38a, 38b), au moins par sections, radialement et/ou axialement par une surface d'enveloppe (16) au moins partiellement périphérique, le rotor de portionnement (24) étant agencé dans la chambre de portionnement (14) de telle sorte
- qu'on obtient, entre le bord radialement extérieur du corps de contact (34, 34a, 34b, 36, 36a, 36b) et une zone partielle de la surface d'enveloppe (16) délimitant radialement, au moins par sections, la chambre de portionnement (14), une fente radiale (48a, 48b) et/ou, entre les bords axialement extérieurs du corps de contact (34, 34a, 34b, 36, 36a, 36b) et les zones partielles de la surface d'enveloppe (16) délimitant axialement, au moins par sections, la chambre de portionnement (14), des fentes axiales (50a, 50b, 52a, 52b) lors du mouvement de rotation du rotor de portionnement (24) et
- que la largeur de fente (60) de la fente radiale (48a, 48b) et/ou des fentes axiales (50a, 50b, 52a, 52b) varie lors d'un mouvement d'écartement du corps de contact (34, 34a, 34b, 36, 36a, 36b).

7. Portionneuse de granulés (10) selon la revendication 6,
**caractérisée en ce que** le rotor de portionnement (24) est agencé dans la chambre de portionnement (14) de telle sorte
- que la largeur de fente (60) de la fente radiale (48a, 48b) varie lors d'un mouvement d'écartement du corps de contact (34, 34a, 34b, 36, 36a, 36b) dans la direction axiale et/ou lors d'un mouvement d'écartement du corps de contact (34, 34a, 34b, 36, 36a, 36b) dans la direction radiale ; et/ou
- que les largeurs de fente (62a, 62b) des fentes axiales (50a, 50b, 52a, 52b) varient lors d'un mouvement d'écartement du corps de contact (34, 34a, 34b, 36, 36a, 36b) dans la direction axiale et/ou lors d'un mouvement d'écartement du corps de contact (34, 34a, 34b, 36, 36a, 36b) dans la direction radiale.

8. Portionneuse de granulés (10) selon la revendication 6 ou 7,
**caractérisée en ce qu'**au moins un bord axialement extérieur du corps de contact (34, 34a, 34b, 36, 36a, 36b) est incliné vers l'extérieur, de telle sorte que la fente axiale (50a, 50b, 52a, 52b) entre le bord axialement extérieur du corps de contact (34, 34a, 34b, 36, 36a, 36b) et une zone partielle de la surface d'enveloppe (16) délimitant axialement, au moins par sections, la chambre de portionnement (14) s'agrandit lors d'un mouvement d'écartement orienté radialement vers l'intérieur du corps de contact (34, 34a, 34b, 36, 36a, 36b), conjointement avec la fente radiale (48a, 48b).

9. Portionneuse de granulés (10) selon l'une des revendications 6 à 8,
**caractérisée en ce qu'**au moins une zone partielle de la surface d'enveloppe (16) délimitant axialement, au moins par sections, la chambre de portionnement (14), est inclinée vers l'extérieur, de telle sorte que la fente axiale (50a, 50b, 52a, 52b) entre le bord axialement extérieur du corps de contact (34, 34a, 34b, 36, 36a, 36b) et la zone partielle de la surface d'enveloppe (16) délimitant axialement, au moins par sections, la chambre de portionnement (14) s'agrandit lors d'un mouvement d'écartement orienté radialement vers l'intérieur du corps de contact (34, 34a, 34b, 36, 36a, 36b), conjointement avec la fente radiale (48a, 48b).

10. Portionneuse de granulés (10) selon l'une des revendications précédentes,
**caractérisée en ce que** le corps de contact (34, 34a, 34b, 36, 36a, 36b) est relié, par l'intermédiaire d'un élément de liaison (40, 40a, 40b, 42, 42a, 42b) d'une ailette de portionnement (32a, 32b) à un moyeu (28) du rotor de portionnement (24).

11. Portionneuse de granulés (10) selon l'une des revendications précédentes,
**caractérisée en ce que** la chambre de portionnement (14) présente une ouverture d'entrée (20) par l'intermédiaire de laquelle des granulés peuvent pénétrer dans la chambre de portionnement (14), l'ouverture d'entrée (20) étant agencée dans une paroi latérale (18) de la chambre de portionnement (14) délimitant latéralement la chambre de portionnement (14) sur un côté d'entrée (64a).

12. Portionneuse de granulés (10) selon la revendication 10 ou 11,
**caractérisée en ce que** l'élément de liaison (40, 40a, 40b, 42, 42a, 42b) est agencé en grande partie ou complètement sur un côté de chambre (64b) de la chambre de portionnement (14) opposé au côté d'entrée (64a).

13. Portionneuse de granulés (10) selon la revendication 11 ou 12,
**caractérisée en ce que** le bord radialement extérieur de l'ouverture d'entrée (20) présente une distance par rapport à la trajectoire (38, 38a, 38b) du corps de contact (34, 34a, 34b, 36, 36a, 36b) qui s'agrandit dans le sens de rotation du rotor de portionnement (24).

14. Machine d'épandage agricole destinée à épandre des portions de granulés sur une surface utile agricole, comportant
- plusieurs portionneuses de granulés (10) pour la génération de portions de granulés ;
**caractérisée en ce qu'**au moins une portionneuse de granulés (10) est conçue selon l'une des revendications précédentes.

15. Procédé de génération de portions de granulés au moyen d'une portionneuse de granulés (10), en particulier au moyen d'une portionneuse de granulés (10) selon l'une des revendications 1 à 13, comportant les étapes consistant à :
- introduire des granulés dans une chambre de portionnement (14) de la portionneuse de granulés (10),
- entraîner en rotation un rotor de portionnement (24) agencé dans la chambre de portionnement ; et
- rassembler des grains de granulé (G) se trouvant dans la chambre de portionnement (14) au moyen d'un corps de contact (34, 34a, 34b, 36, 36a, 36b) du rotor de portionnement (24) en mouvement le long d'une trajectoire (38, 38a, 38b) pendant un mouvement de rotation du rotor de portionnement (24) ;
**caractérisé en ce que** le corps de contact (34, 34a, 34b, 36, 36a, 36b) quitte temporairement, au moyen d'un mécanisme d'écartement du rotor de portionnement (24), la trajectoire (38, 38a, 38b) pendant le mouvement de rotation du rotor de portionnement (24), afin d'éliminer ou d'empêcher des blocages entre le rotor de portionnement (24) et les grains de granulé (G).
